# EUROPÄISCHE PATENTANMELDUNG

(11) **EP 3 885 595 A1**
(43) Veröffentlichungstag der Anmeldung: **29.09.2021**
(21) Anmeldenummer: 21164215.2
(22) Anmeldetag: 23.03.2021
(51) Int. Cl.: F16C 29/00, F16C 29/02, F16C 29/12

(54) **LOSLAGERELEMENT, LOSLAGER UND LOSLAGERANORDNUNGEN**

(30) Priorität: 25.03.2020 DE 202020101600 U
(71) Anmelder: Cholewik, Frank, 65795 Hattersheim (DE)
(72) Erfinder: Cholewik, Frank, 65795 Hattersheim (DE)
(74) Vertreter: Herrmann, Daniel

(57) **Zusammenfassung**

Ein Loslagerelement (4) zur Montage eines ersten Bauteils an einem zweiten Bauteil umfasst einen Träger (9), der ausgelegt ist, an dem zweiten Bauteil befestigt zu werden; ein Gleitlager (7), das relativ zu dem Träger (9) beweglich angeordnet ist; und ein elastisches Element (8), das derart zwischen dem Träger (9) und dem Gleitlager (7) angeordnet ist, dass, wenn eine Kraft seitens des ersten Bauteils auf das Gleitlager (7) einwirkt, die Kraft eine Verformung des elastischen Elements (8) bewirkt. Ein Loslager umfasst ferner das Loslagerelement (4), das erste Bauteil und das zweite Bauteil. Eine Loslageranordnung eines ersten Typs umfasst ferner das Loslager, eine Führungsschiene (1), einen Führungswagen (3) und ein zu führendes Bauteil (6), wobei das erste Bauteil ein Teil des zu führenden Bauteils (6) ist und das zweite Bauteil ein Teil des Führungswagens (3) ist. Eine Loslageranordnung eines zweiten Typs umfasst ferner das Loslager, eine Grundplatte (11), eine Führungsschiene (1) und einen Führungswagen (3), wobei das erste Bauteil ein Teil der Grundplatte (11) ist und das zweite Bauteil ein Teil der Führungsschiene (1) ist. Eine Fest-Loslageranordnung eines ersten oder zweiten Typs umfasst ferner die Loslageranordnung des ersten bzw. zweiten Typs, wobei die Führungsschiene (1) eine loslagerseitige Führungsschiene (1) ist und der Führungswagen (3) ein loslagerseitiger Führungswagen (3) ist; eine festlagerseitige Führungsschiene (2); und einen festlagerseitigen Führungswagen (5).

## Beschreibung

### Technisches Gebiet

Die vorliegende Erfindung bezieht sich auf ein Loslagerelement zur Montage eines ersten Bauteils an einem zweiten Bauteil sowie auf ein Loslager und Loslageranordnungen mit dem Loslagerelement. Insbesondere kann sich die vorliegende Erfindung auf ein Loslagerelement zur Bereitstellung eines Reibschlusses zur spielfreien Montage eines Bauteils beziehen, die einen Toleranzausgleich zulässt, sobald die Kraft des Reibschlusses überwunden wird.

### Stand der Technik

Führungen werden zum Beispiel im Maschinenbau eingesetzt, um ein Bauteil in einer Bewegungsachse frei zu verfahren, in den anderen zwei Achsen aber keine Bewegung zuzulassen. Sonderbauformen lassen auch Bewegungen in mehreren Richtungen zu, werden hier aber nicht weiter berücksichtigt.

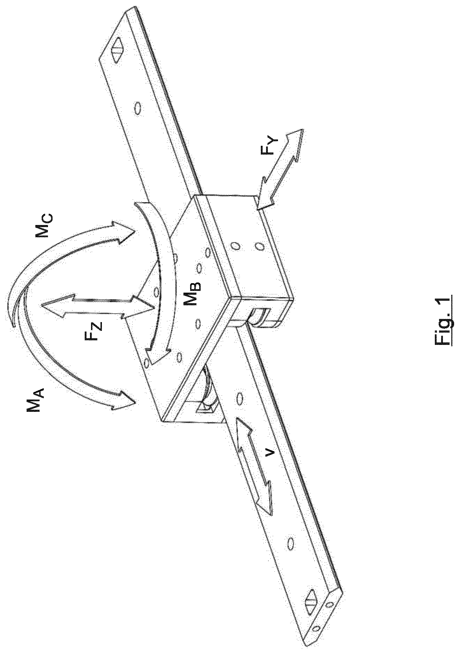

Fig. 1 zeigt eine Führung des Stands der Technik. Um die Bewegung nur in eine Achsenrichtung zuzulassen, ist es notwendig, Kräfte, die aus den anderen beiden Achsrichtungen auf die Führung einwirken (F_{Z} und Fy in Fig. 1), aufzunehmen. Kräfte, deren Vektor nicht direkt auf die Führungsmitte trifft, werden als Momente bezeichnet. Eine Führung muss außer den Kräften aus zwei Achsrichtungen auch Momente entlang der drei Achsrichtungen (M_{A}, M_{B} und M_{C} in Fig. 1) aufnehmen. In Fig. 1 bezeichnet V eine Verfahrrichtung (Kräfte in Richtung der X-Achse werden nicht aufgenommen).

Führungen können auf Grund des Aufbaus der Maschinen häufig nicht in unmittelbarer Nähe der bewegten Masse platziert werden. Dies führt zu hohen Momentbelastungen auf die Führungen. Um diese aufzunehmen, sind große Führungen erforderlich, oder es werden zwei oder mehr Führungen parallel eingesetzt und die zu verfahrende Masse zwischen diesen Führungen angeordnet. In Maschinen müssen zu verfahrende Massen häufig auf mehr als einer Führung verschraubt werden, um die auftretenden Kräfte und Momente aufzunehmen. In den meisten Fällen verfahren hierzu Führungswagen auf zwei parallelen Führungsschienen. Die Anordnung mit zwei Führungen erlaubt es, die Momentbelastung zu reduzieren und kleinere Führungen zu verwenden. Diese Anordnung führt jedoch zu sich wiedersprechenden Anforderungen an die Anordnung der Komponenten. Um die Masse fest und spielfrei zu montieren, muss sie auf beiden Führungsschienen fest montiert werden. Ist dies erfolgt, ist das System damit statisch überbestimmt. Jedwede Abweichung in der Parallelität oder Höhe (Z-Achse) der beiden Schienen muss durch die elastische Verformung der Bauteile aufgenommen werden. Diese Abweichungen werden im Weiteren Fluchtungsfehler genannt. Fluchtungsfehler leiten Kräfte in das System ein, die von den Führungen zusätzlich aufgenommen werden müssen.

Um Fluchtungsfehler zu minimieren, wird entweder eine hohe Genauigkeit in der Anordnung der Schienen (zum Beispiel weniger als ±0,01 mm) gefordert, zum Beispiel um den Abstand zwischen den Führungsschienen über die Länge gleich zu belassen, oder es wird eine Möglichkeit geschaffen, um die Toleranzen auszugleichen. Diese Möglichkeit des Toleranzausgleichs erfolgt üblicherweise durch eine feste Montage der Führungsschiene auf der einen Seite (Festlageranordnung) und eine verschiebbare Lagerung der zweiten Führungsschiene (Loslageranordnung). Die Fest-Loslageranordnung ist insbesondere dann erforderlich, wenn durch Wärme oder andere störende Einflüsse die Position der Führungen zueinander oder des Bauteils zwischen den Führungen veränderlich ist.

Bei den üblichen Loslageranordnungen wird entweder eine Bewegung der Führungsschiene oder eine Bewegung des auf dem Führungswagen montierten Bauteils zugelassen. Diese Bewegung zuzulassen, erfordert üblicherweise ein minimales Spiel in der Befestigung der Bauteile und damit eine reduzierte Führungsgenauigkeit. Der Aufbau des Loslagers erfolgt üblicherweise in Abhängigkeit von der Anwendung durch mechanische Bauteile, die konstruiert und gefertigt werden. Die Nachteile einer üblichen Loslageranordnung sind daher, dass eine spezifische Befestigung konstruiert werden muss und ein Spiel verbleibt, das zu reduzierter Führungsgenauigkeit, Lärm und Vibrationen führt.

### Zusammenfassung der Erfindung

Die vorliegende Erfindung bezieht sich auf ein Loslagerelement nach Hauptanspruch 1, ein Loslager nach Anspruch 9, eine Loslageranordnung nach Anspruch 12 und Anspruch 14 sowie eine Fest-Loslageranordnung nach Anspruch 13 und Anspruch 15. Bevorzugte Ausführungsformen sind durch die Unteransprüche beschrieben.

Das erfindungsgemäße Loslagerelement dient der Montage eines ersten Bauteils an einem zweiten Bauteil, wobei das Loslagerelement umfasst: einen Träger, der ausgelegt ist, an dem zweiten Bauteil befestigt zu werden; ein Gleitlager, das relativ zu dem Träger beweglich angeordnet ist; und ein elastisches Element, das derart zwischen dem Träger und dem Gleitlager angeordnet ist, dass, wenn eine Kraft seitens des ersten Bauteils auf das Gleitlager einwirkt, die Kraft eine Verformung des elastischen Elements bewirkt, wobei, wenn die Kraft auf das Gleitlager einwirkt, das Gleitlager ausgelegt ist, sich relativ zu dem Träger in eine Achsenrichtung des Loslagerelements zu bewegen, so dass das elastische Element gestaucht wird, und wobei der Träger einen Anschlag für das Gleitlager umfasst, wobei der Anschlag ausgelegt ist, die Stauchung des elastischen Elements zu begrenzen, und wobei, wenn das elastische Element gestaucht wird, das elastische Element ausgelegt ist, eine Gegenkraft bereitzustellen, die auf das Gleitlager einwirkt, und wobei die Gegenkraft eine Klemmkraft seitens des Gleitlagers auf das erste Bauteil bewirkt, wobei die Klemmkraft geeignet ist, einer Kraft auf das erste Bauteil in der Achsenrichtung entgegenzuwirken und dadurch das erste Bauteil relativ zu dem zweiten Bauteil in der Achsenrichtung in Position zu halten sofern die Kraft auf das erste Bauteil in der Achsenrichtung nicht größer ist als die Klemmkraft, und wobei die Klemmkraft eine Haftreibungskraft zwischen dem Gleitlager und dem ersten Bauteil bewirkt, wobei die Haftreibungskraft geeignet ist, einer Kraft auf das erste Bauteil senkrecht zu der Achsenrichtung entgegenzuwirken und dadurch das erste Bauteil relativ zu dem zweiten Bauteil mittels Reibschluss senkrecht zu der Achsenrichtung in Position zu halten sofern die Kraft auf das erste Bauteil senkrecht zu der Achsenrichtung nicht größer ist als die Haftreibungskraft.

Ferner umfasst das erfindungsgemäße Loslager: das Loslagerelement; das erste Bauteil; und das zweite Bauteil.

Ferner umfasst die erfindungsgemäße Loslageranordnung eines ersten Typs: das Loslager; eine Führungsschiene; einen Führungswagen, der auf der Führungsschiene montierbar ist und ausgelegt ist, entlang der Führungsschiene bewegt zu werden; und ein mittels des Führungswagens zu führendes Bauteil, wobei das erste Bauteil ein Teil des zu führenden Bauteils ist und das zweite Bauteil ein Teil des Führungswagens ist.

Ferner umfasst die erfindungsgemäße Fest-Loslageranordnung eines ersten Typs: die Loslageranordnung des ersten Typs, wobei die Führungsschiene eine loslagerseitige Führungsschiene ist und der Führungswagen ein loslagerseitiger Führungswagen ist; eine festlagerseitige Führungsschiene, die parallel zu der loslagerseitigen Führungsschiene angeordnet ist; und einen festlagerseitigen Führungswagen, der auf der festlagerseitigen Führungsschiene montierbar ist und ausgelegt ist, entlang der festlagerseitigen Führungsschiene bewegt zu werden, wobei das zu führende Bauteil an dem festlagerseitigen Führungswagen befestigbar ist.

Ferner umfasst die erfindungsgemäße Loslageranordnung eines zweiten Typs: das Loslager; eine Grundplatte; eine Führungsschiene; einen Führungswagen, der auf der Führungsschiene montierbar ist und ausgelegt ist, entlang der Führungsschiene bewegt zu werden, wobei das erste Bauteil ein Teil der Grundplatte ist und das zweite Bauteil ein Teil der Führungsschiene ist.

Ferner umfasst die erfindungsgemäße Fest-Loslageranordnung eines zweiten Typs: die Loslageranordnung des zweiten Typs, wobei die Führungsschiene eine loslagerseitige Führungsschiene ist und der Führungswagen ein loslagerseitiger Führungswagen ist; eine festlagerseitige Führungsschiene, die parallel zu der loslagerseitigen Führungsschiene angeordnet ist; und einen festlagerseitigen Führungswagen, der auf der festlagerseitigen Führungsschiene montierbar ist und ausgelegt ist, entlang der festlagerseitigen Führungsschiene bewegt zu werden, wobei die Grundplatte an der festlagerseitigen Führungsschiene befestigbar ist.

Das Loslagerelement der vorliegenden Erfindung ermöglicht es, das erste Bauteil an dem zweiten Bauteil zu montieren, sodass ein Loslager entsteht. Dabei ermöglicht es die Klemmkraft, das erste Bauteil relativ zu dem zweiten Bauteil in einer ersten Achsenrichtung des Loslagerelements in Position zu halten, während es die Haftreibungskraft ermöglicht, das erste Bauteil relativ zu dem zweiten Bauteil mittels Reibschluss senkrecht zu der Achsenrichtung in Position zu halten. Dies ermöglicht eine spielfreie Montage des ersten an dem zweiten Bauteil, und somit entsteht ein spielfreies Loslager. Wenn das Loslager in einer (Fest-)Loslageranordnung zur Führung eines Bauteils verwendet wird, entsteht somit eine spielfreie (Fest-)Loslageranordnung. Dadurch wird die Führungsgenauigkeit der (Fest-)Loslageranordnung erhöht, während Lärm und Vibrationen verringert werden.

Ferner lässt das Loslagerelement der vorliegenden Erfindung einen Toleranzausgleich in der Achsenrichtung zu. Das heißt, das erste Bauteil kann sich relativ zu dem zweiten Bauteil in die Achsenrichtung bewegen, sobald eine Kraftkomponente auf das erste Bauteil in der Achsenrichtung größer ist als die Klemmkraft. Ferner lässt das Loslagerelement der vorliegenden Erfindung einen Toleranzausgleich senkrecht zu der Achsenrichtung zu. Das heißt, das erste Bauteil kann sich relativ zu dem zweiten Bauteil senkrecht zu der Achsenrichtung bewegen, sobald eine Kraftkomponente auf das erste Bauteil senkrecht zu der Achsenrichtung größer ist als die Haftreibungskraft des Reibschlusses. Dadurch kann eine statische Überbestimmung vermieden werden. Insbesondere können in einer Fest-Loslageranordnung mit zwei parallelen Führungsschienen Fluchtungsfehler, insbesondere Fluchtungsfehler, die aus einer Abweichung in der Höhe einer Schiene oder einer Abweichung in dem horizontalen Abstand zwischen den zwei parallelen Schienen resultieren, ausgeglichen werden. Somit kann ein Verklemmen der Komponenten der Fest-Loslageranordnung und eine Beschädigung der Fest-Loslageranordnung vermieden werden.

Ferner ist mit dem Loslagerelement der vorliegenden Erfindung eine einfache und kostengünstige Montage des ersten Bauteils an dem zweiten Bauteil möglich. Insbesondere kann das Loslagerelement mit üblichen Bauteilen oder mit speziell für die jeweilige Anwendung konstruierten Bauteilen verwendet werden. Das Loslagerelement ist somit universell einsetzbar, und eine spezielle Konstruktion einer Befestigung zwischen dem ersten und dem zweiten Bauteil wird somit überflüssig. Durch den oben beschriebenen geradlinigen Aufbau des Loslagerelements können somit die Kosten für die Herstellung des Loslagerelements und die Kosten für den Aufbau des Loslagers und der (Fest-)Loslageranordnungen gesenkt werden.

### Kurze Beschreibung der Zeichnungen

Fig. 1 zeigt eine Perspektivansicht einer Führung des Stands der Technik.
Fig. 2 zeigt eine seitliche Querschnittsansicht eines Loslagerelements gemäß der vorliegenden Erfindung.
Fig. 3a zeigt eine Perspektivansicht eines Loslagerelements gemäß einer ersten Ausführungsform der vorliegenden Erfindung.
Fig. 3b zeigt eine Perspektivansicht eines Loslagerelements gemäß einer zweiten Ausführungsform der vorliegenden Erfindung.
Fig. 4a zeigt eine Perspektivansicht einer Fest-Loslageranordnung eines ersten Typs gemäß einer ersten Ausführungsform der vorliegenden Erfindung.
Fig. 4b zeigt eine Perspektivansicht einer Fest-Loslageranordnung eines ersten Typs gemäß einer zweiten Ausführungsform der vorliegenden Erfindung.
Fig. 5 zeigt eine Perspektivansicht einer Fest-Loslageranordnung eines zweiten Typs gemäß der vorliegenden Erfindung.
Fig. 6a zeigt eine Seitenansicht der Fest-Loslageranordnung aus Fig. 5, in der ein Schnittverlauf A-A gekennzeichnet ist.
Fig. 6b zeigt eine Querschnittsansicht der Fest-Loslageranordnung aus Fig. 5 gemäß dem in Fig. 6a gekennzeichneten Schnittverlauf A-A.
Fig. 6c zeigt einen vergrößerten Ausschnitt der Querschnittsansicht aus Fig. 6b.
Fig. 7 zeigt eine seitliche Querschnittsansicht und eine entsprechende Draufsicht einer beispielhaften Aufnahmebohrung in einem ersten Bauteil und eines beispielhaften Gewindes in einem zweiten Bauteil für ein Loslagerelement der vorliegenden Erfindung.

### Beschreibung der Ausführungsformen

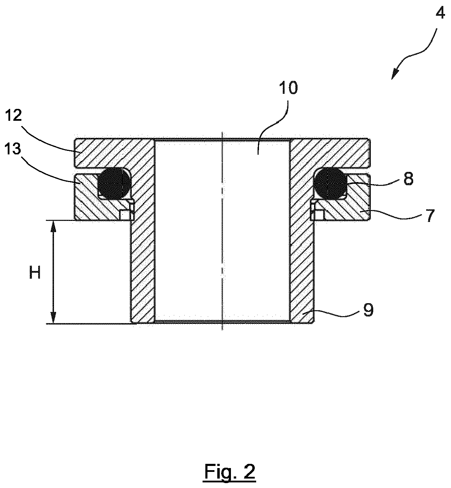

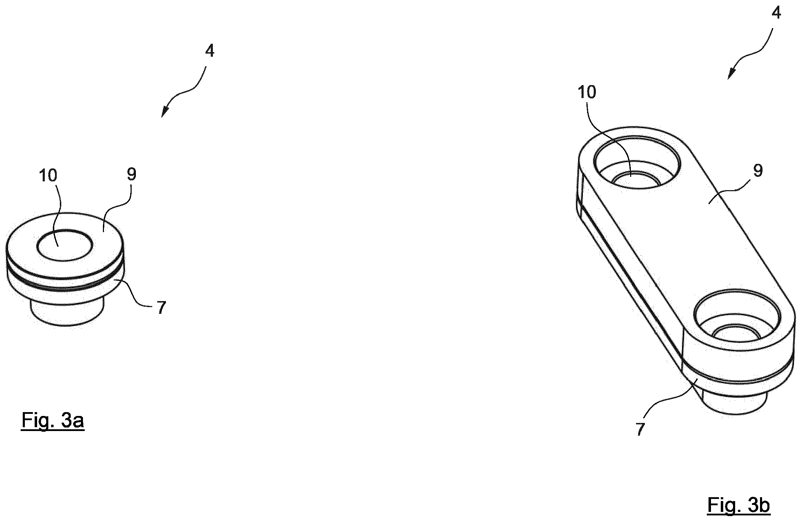

Fig. 2 zeigt eine seitliche Querschnittsansicht eines Loslagerelements (4) gemäß der vorliegenden Erfindung. Fig. 3a zeigt eine Perspektivansicht des Loslagerelements (4) gemäß einer ersten Ausführungsform der vorliegenden Erfindung, und Fig. 3b zeigt eine Perspektivansicht des Loslagerelements (4) gemäß einer zweiten Ausführungsform der vorliegenden Erfindung. Im Folgenden werden zuerst generelle Aspekte des erfindungsgemäßen Loslagerelements (4) beschrieben; Besonderheiten der ersten bzw. zweiten Ausführungsform werden weiter unten beschrieben.

Gemäß einem generellen Aspekt der vorliegenden Erfindung dient das Loslagerelement (4) der Montage eines ersten Bauteils an einem zweiten Bauteil, und wie in Fig. 2, 3a und 3b zu sehen ist, umfasst das Loslagerelement (4): einen Träger (9), der ausgelegt ist, an dem zweiten Bauteil befestigt zu werden; ein Gleitlager (7), das relativ zu dem Träger (9) beweglich angeordnet ist; und ein elastisches Element (8), das derart zwischen dem Träger (9) und dem Gleitlager (7) angeordnet ist, dass, wenn eine Kraft seitens des ersten Bauteils auf das Gleitlager (7) einwirkt, die Kraft eine Verformung des elastischen Elements (8) bewirkt, wobei, wenn die Kraft auf das Gleitlager (7) einwirkt, das Gleitlager (7) ausgelegt ist, sich relativ zu dem Träger (9) in eine Achsenrichtung des Loslagerelements (4) zu bewegen, so dass das elastische Element (8) gestaucht wird, und wobei der Träger (9) einen Anschlag (12) für das Gleitlager (7) umfasst, wobei der Anschlag (12) ausgelegt ist, die Stauchung des elastischen Elements (8) zu begrenzen, und wobei, wenn das elastische Element (8) gestaucht wird, das elastische Element (8) ausgelegt ist, eine Gegenkraft bereitzustellen, die auf das Gleitlager (7) einwirkt, und wobei die Gegenkraft eine Klemmkraft seitens des Gleitlagers (7) auf das erste Bauteil bewirkt, wobei die Klemmkraft geeignet ist, einer Kraft auf das erste Bauteil in der Achsenrichtung entgegenzuwirken und dadurch das erste Bauteil relativ zu dem zweiten Bauteil in der Achsenrichtung in Position zu halten sofern die Kraft auf das erste Bauteil in der Achsenrichtung nicht größer ist als die Klemmkraft, und wobei die Klemmkraft eine Haftreibungskraft zwischen dem Gleitlager (7) und dem ersten Bauteil bewirkt, wobei die Haftreibungskraft geeignet ist, einer Kraft auf das erste Bauteil senkrecht zu der Achsenrichtung entgegenzuwirken und dadurch das erste Bauteil relativ zu dem zweiten Bauteil mittels Reibschluss senkrecht zu der Achsenrichtung in Position zu halten sofern die Kraft auf das erste Bauteil senkrecht zu der Achsenrichtung nicht größer ist als die Haftreibungskraft.

Das Loslagerelement (4) der vorliegenden Erfindung kann insbesondere als eine Klemmschraube oder eine Verschraubung realisiert sein.

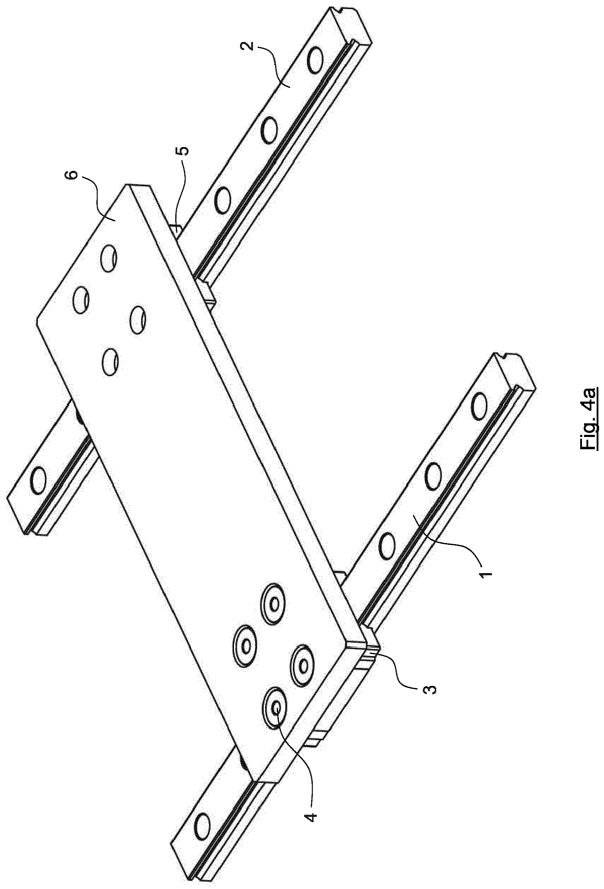

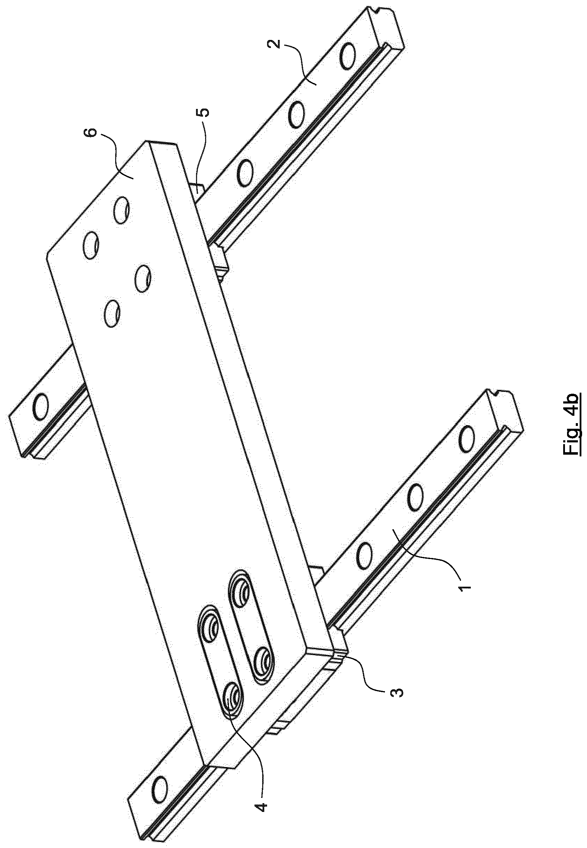

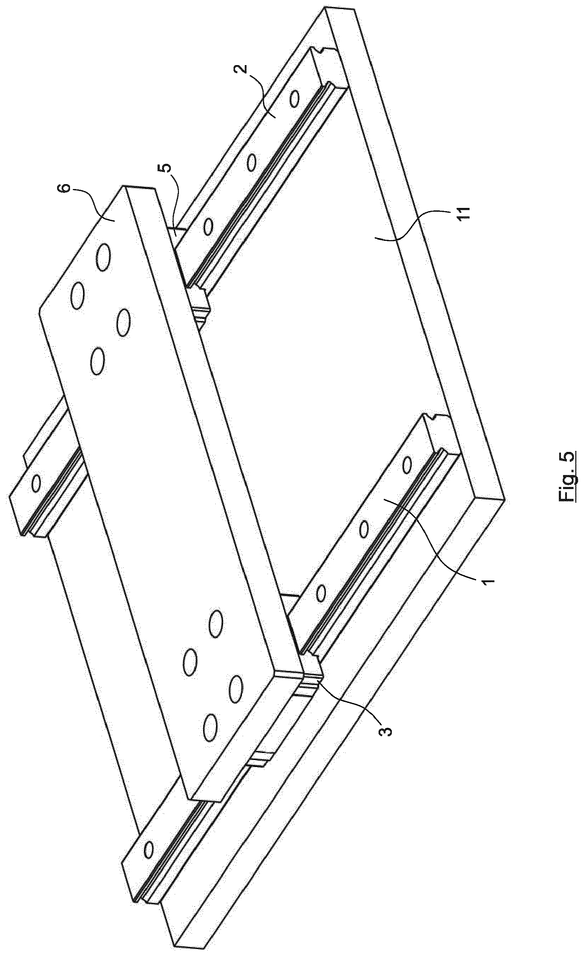

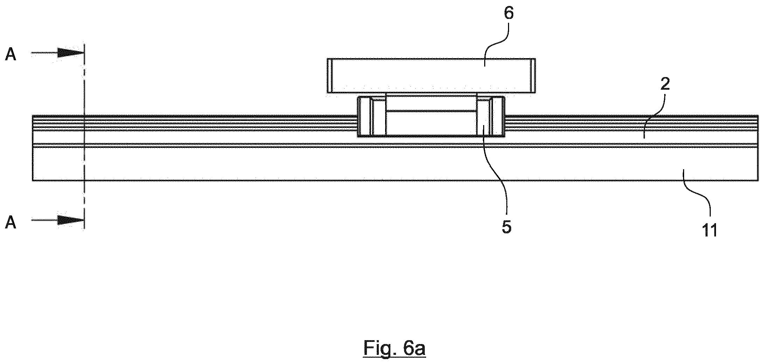

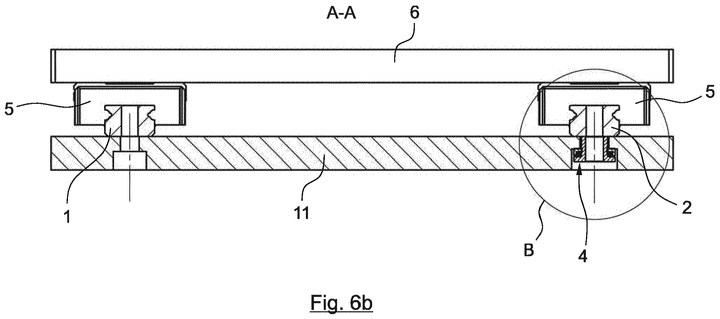

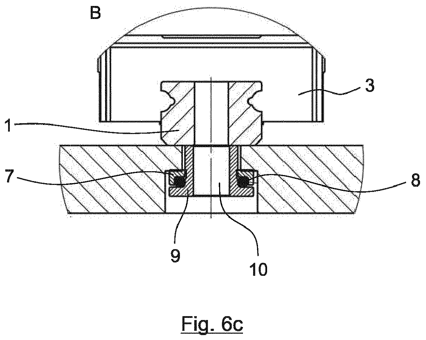

Mithilfe des Loslagerelements (4) kann das erste Bauteil an dem zweiten Bauteil montiert werden. Dadurch entsteht ein Loslager, welches das Loslagerelement (4), das erste Bauteil und das zweite Bauteil umfasst, wie später ausführlich beschrieben wird. Das erste Bauteil kann zum Beispiel ein Teil eines zu führenden Bauteils (6) einer Loslageranordnung oder einer Fest-Loslageranordnung sein, und das zweite Bauteil kann zum Beispiel ein Teil eines (loslagerseitigen) Führungswagens (3) der (Fest-)Loslageranordnung sein. Eine solche Fest-Loslageranordnung des ersten Typs ist in Fig. 4a und Fig. 4b dargestellt, wie später ausführlich beschrieben wird. Alternativ kann das erste Bauteil eine Grundplatte (11) einer Loslageranordnung oder einer Fest-Loslageranordnung sein, und das zweite Bauteil kann ein Teil einer (loslagerseitigen) Führungsschiene (1) der (Fest-)Loslageranordnung sein. Eine solche Fest-Loslageranordnung ist in Fig. 5, 6a, 6b und 6c dargestellt, wie später ausführlich beschrieben wird.

Um das erste Bauteil an dem zweiten Bauteil zu montieren, wird der Träger (9) des Loslagerelements (4) an dem zweiten Bauteil befestigt. Die Klemmkraft ermöglicht es, das erste Bauteil relativ zu dem zweiten Bauteil in der Achsenrichtung in Position zu halten, sofern eine äußere Kraft auf das erste Bauteil in der Achsenrichtung nicht größer ist als die Klemmkraft. Ferner ermöglicht es die Haftreibungskraft, das erste Bauteil relativ zu dem zweiten Bauteil mittels Reibschluss senkrecht zu der Achsenrichtung in Position zu halten, sofern eine äußere Kraft auf das erste Bauteil senkrecht zu der Achsenrichtung nicht größer ist als die Haftreibungskraft.

Wenn zum Beispiel eine äußere Kraft auf das erste Bauteil in der Achsenrichtung einwirkt, kann diese Kraft von dem ersten Bauteil auf das Gleitlager (7) übertragen werden, sodass eine Kraft seitens des ersten Bauteils auf das Gleitlager (7) wirkt. Diese Kraft auf das Gleitlager (7) bewirkt, dass sich das Gleitlager (7) relativ zu dem Träger (9) in der Achsenrichtung des Loslagerelements (4) bewegt und folglich das elastische Element (8) verformt, insbesondere staucht. Infolgedessen stellt das elastische Element (8) eine Gegenkraft bereit, die auf das Gleitlager (7) einwirkt. Diese Gegenkraft auf das Gleitlager (7) wird auf das erste Bauteil übertragen, sodass eine Klemmkraft seitens des Gleitlagers (7) auf das erste Bauteil wirkt. Diese Klemmkraft wirkt der äußeren Kraft auf das erste Bauteil in der Achsenrichtung entgegen. Dadurch wird das erste Bauteil relativ zu dem zweiten Bauteil in der Achsenrichtung in Position gehalten, sofern die äußere Kraft auf das erste Bauteil in der Achsenrichtung nicht größer ist als die Klemmkraft.

Ferner bewirkt die Klemmkraft eine Haftreibungskraft zwischen dem Gleitlager (7) und dem ersten Bauteil. Dadurch entsteht ein Reibschluss zwischen dem Gleitlager (7) und dem ersten Bauteil. Wenn zum Beispiel eine äußere Kraft auf das erste Bauteil senkrecht zu der Achsenrichtung einwirkt, ist die Haftreibungskraft geeignet, dieser äußeren Kraft entgegenzuwirken und dadurch das erste Bauteil relativ zu dem zweiten Bauteil mittels Reibschluss senkrecht zu der Achsenrichtung in Position zu halten, sofern die äußere Kraft auf das erste Bauteil senkrecht zu der Achsenrichtung nicht größer ist als die Haftreibungskraft.

Mithilfe des Loslagerelements (4) der vorliegenden Erfindung ist es somit möglich, das erste Bauteil an dem zweiten Bauteil zu montieren, so dass das erste Bauteil relativ zu dem zweiten Bauteil in Position gehalten wird. Insbesondere ist es somit möglich, das erste Bauteil so an dem zweiten Bauteil zu montieren, dass kein Spiel zwischen dem ersten und dem zweiten Bauteil verbleibt. Somit ist es möglich, ein spielfreies Loslager aus dem ersten Bauteil, dem zweiten Bauteil und dem Loslagerelement bereitzustellen.

Wenn jedoch eine äußere Kraft auf das erste Bauteil in der Achsenrichtung größer ist als die Klemmkraft, kann sich das erste Bauteil relativ zu dem zweiten Bauteil in der Achsenrichtung bewegen. Wenn ferner eine äußere Kraft auf das erste Bauteil senkrecht zu der Achsenrichtung größer ist als die Haftreibungskraft, kann sich das erste Bauteil relativ zu dem zweiten Bauteil senkrecht zu der Achsenrichtung bewegen. Somit ermöglicht das Loslagerelement (4) einen Toleranzausgleich in allen drei Raumrichtungen, d.h. in der Achsenrichtung und in den beiden Raumrichtungen senkrecht zu der Achsenrichtung des Loslagerelements (4). Somit kann eine statische Überbestimmung des Loslagers vermieden werden, und Fluchtungsfehler, die aus einer Bewegung der Bauteile zueinander resultieren, können ausgeglichen werden. Ferner kann das Loslager äußere Kräfte und Momente auf das erste und/oder das zweite Bauteil aufnehmen, und eine Beschädigung des Loslagers durch äußere Kräfte und Momente kann somit verhindert werden.

Insbesondere können das erste und das zweite Bauteil jeweils Standardbauteile oder abhängig von der Anwendung speziell konstruierte Bauteile sein. In jedem dieser Fälle ermöglicht das Loslagerelement (4) eine einfache Montage des ersten Bauteils an dem zweiten Bauteil, und somit wird eine spezielle Konstruktion einer Befestigung zwischen dem ersten Bauteil und dem zweiten Bauteil überflüssig. Das Loslagerelement (4) muss lediglich an dem zweiten Bauteil befestigt werden, um das erste Bauteil an dem zweiten Bauteil zu montieren. Somit ermöglicht das Loslagerelement (4) der vorliegenden Erfindung eine einfache und kostengünstige Montage des ersten Bauteils an dem zweiten Bauteil für eine Vielzahl von möglichen Bauteilen und Anwendungen.

Die Bewegung des Gleitlagers (7) in der Achsenrichtung wird durch den Anschlag (12) des Trägers (9) für das Gleitlager (7) begrenzt. Der Anschlag (12) des Trägers (9) kann zum Beispiel durch einen Vorsprung (12) des Trägers (9) realisiert werden, der einem Bund (13) des Gleitlagers (7) gegenüberliegt, wie in Fig. 2 dargestellt. Durch den Anschlag (12) wird die Stauchung des elastischen Elements (8) begrenzt, und es wird verhindert, dass das elastische Element über seine Belastungsgrenze gestaucht wird und es zu einer plastischen Verformung kommt. Somit wird eine Beschädigung des Loslagerelements (4) verhindert.

Ferner wird durch den Anschlag (12) eine Bewegung des ersten Bauteils relativ zu dem zweiten Bauteil in der Achsenrichtung begrenzt. Die Bewegung des ersten Bauteils relativ zu dem zweiten Bauteil in der Achsenrichtung kann in ihrem Hub formschlüssig begrenzt sein. Mit anderen Worten kann der Weg zum Ausgleich der Toleranz formschlüssig begrenzt sein. Somit wird zusätzlich die Stabilität des Loslagers erhöht.

Gemäß einem Aspekt der vorliegenden Erfindung umschließt das Gleitlager (7) den Träger (9) in einer Ebene senkrecht zu der Achsenrichtung zumindest teilweise oder vollständig, wie in Fig. 2, 3a und 3b zu sehen ist. Somit wird eine Bewegung des Gleitlagers (7) relativ zu dem Träger (9) auf eine Bewegung in die Achsenrichtung beschränkt.

Somit wird das Gleitlager (7) relativ zu dem Träger (9) senkrecht zu der Achsenrichtung in Position gehalten. Da der Träger (9) an dem zweiten Bauteil befestigt ist und ein Reibschluss zwischen dem Gleitlager (7) und dem ersten Bauteil vorhanden ist, wird somit das erste Bauteil relativ zu dem zweiten Bauteil senkrecht zu der Achsenrichtung besonders wirksam in Position gehalten, sofern eine äußere Kraft auf das erste Bauteil senkrecht zu der Achsenrichtung nicht größer ist als die Haftreibungskraft.

Gemäß einem Aspekt der vorliegenden Erfindung umfasst der Träger (9) ein oder mehrere Bohrungen (10), die ein oder mehrere Schrauben zur Befestigung des Trägers (9) an dem zweiten Bauteil führen können, wie in Fig. 2, 3a und 3b zu sehen ist. Alternativ kann der Träger (9) auch ein oder mehrere Innengewinde umfassen, in die ein oder mehrere Schrauben schraubbar sind, um den Träger (9) an dem zweiten Bauteil zu befestigen. Insbesondere kann der Träger (9) eine Hülse (9) sein. Das Gleitlager (7) und das elastisches Element (8) können auf der Hülse (9) sitzen, die mit der Schraube auf dem zweiten Bauteil montiert wird.

Dadurch kann der Träger (9) auf einfache Weise mittels Schrauben an dem zweiten Bauteil befestigt werden. Dadurch wird die Montage des ersten Bauteils an dem zweiten Bauteil vereinfacht und die Kosten des Loslagers werden gesenkt. Insbesondere können das erste und das zweite Bauteil Standardbauteile oder speziell für die jeweilige Anwendung gefertigte Bauteile sein. Das Loslagerelement (4) kann mit einer Schraube in ein Gewinde des zweiten Bauteils geschraubt werden. Insbesondere kann die Schraube durch das zweite Bauteil geschraubt werden. Dadurch ist das Loslagerelement (4) universell einsetzbar.

Gemäß einem Aspekt der vorliegenden Erfindung ist jede Bohrung (10) der ein oder mehreren Bohrungen (10) des Trägers (9) eine Senkbohrung. Ferner kann jede Schraube der ein oder mehreren Schrauben, die von den ein oder mehreren Bohrungen (10) geführt werden, eine Senkschraube sein. Somit wird eine flächenbündige Montage des ersten Bauteils mithilfe des Loslagerelements (4) vereinfacht.

Gemäß der in Fig. 3a dargestellten ersten Ausführungsform der vorliegenden Erfindung umfasst der Träger (9) nur eine kreisförmige Bohrung (10), und der Träger (9) weist eine kreisförmige Querschnittsfläche senkrecht zu der Achsenrichtung auf, wobei die kreisförmige Querschnittsfläche konzentrisch mit der kreisförmigen Bohrung (10) ist. Diese Ausführungsform ermöglicht die Aufnahme des Loslagerelements (4) in gewöhnlichen kreisförmigen Aufnahmebohrungen (Rundlöchern) des ersten Bauteils. Solche Rundlöcher können kostengünstig in Standardbauteilen oder speziell für die jeweilige Anwendung gefertigten Bauteilen bereitgestellt werden. Das Loslagerelement (4) gemäß der ersten Ausführungsform ist daher besonders kostengünstig und universell einsetzbar.

Gemäß der in Fig. 3b dargestellten zweiten Ausführungsform der vorliegenden Erfindung umfasst der Träger (9) mindestens zwei kreisförmige Bohrungen (10), und der Träger (9) weist eine Querschnittsfläche auf, die aus einem Rechteck und zwei an gegenüberliegenden Seiten des Rechtecks angrenzenden Halbkreisen gebildet wird, wobei jeder Halbkreis konzentrisch mit einer der mindestens zwei kreisförmigen Bohrungen (10) ist, wie in Fig. 3b dargestellt. Das Loslagerelement (4) der zweiten Ausführungsform kann in Langlöchern des ersten Bauteils erfolgen. Dadurch kann eine Auflagefläche zwischen dem Gleitlager (7) und dem ersten Bauteil vergrößert werden. Dadurch kann die Haftreibungskraft zwischen dem Gleitlager (7) und dem ersten Bauteil vergrößert werden. Dies ermöglicht es, den Toleranzausgleich bzw. den Hub zum Toleranzausgleich senkrecht zu der Achsenrichtung zu vergrößern.

Man beachte, dass die Größe der Aufnahmebohrung in dem ersten Bauteil nicht zu groß sein darf, damit das Gleitlager (7) noch eine ausreichende Auflagefläche behält. Ist es notwendig, den Abstand zwischen den Führungen um mehr als ca. 1 mm auszugleichen, kann die Montage in einem Langloch vorteilhaft sein. Das Gleitlager (7) liegt dann nur auf den beiden Seiten auf und nicht mehr auf der gesamten Kreisfläche.

Mit anderen Worten kann das Loslagerelement (4) eine zylindrische Form besitzen und in einem Gewinde verschraubt werden, wie in Fig. 3a dargestellt, oder es kann andere Formen haben und in mehr als einem Gewinde befestigt werden, wie in Fig. 3b dargestellt. Man beachte, dass das Loslagerelement (4) nicht auf die erste und die zweite Ausführungsform beschränkt ist. Der Träger (9) kann auch andere Querschnittsflächen als die in der ersten und zweiten Ausführungsform aufweisen.

Gemäß einem Aspekt der vorliegenden Erfindung ist der Träger (9) eine Schraube mit Außengewinde, vorzugsweise eine Bundschraube, die ausgelegt, in ein Gewinde des zweiten Bauteils geschraubt zu werden.

Dadurch kann der Träger (9) direkt an dem zweiten Bauteil befestigt werden, indem er in ein Gewinde des zweiten Bauteils geschraubt wird. Somit sind keine zusätzlichen Schrauben zur Befestigung des Trägers (9) nötig. Somit wird die Montage des ersten Bauteils an dem zweiten Bauteil mithilfe des Loslagerelements (4) weiter vereinfacht und die Kosten werden gesenkt.

Gemäß einem Aspekt der vorliegenden Erfindung umfasst ein Loslager das Loslagerelement (4), das erste Bauteil und das zweite Bauteil. Wie oben bereits erwähnt wurde, kann das erste Bauteil ein Teil eines zu führenden Bauteils (6) einer Loslageranordnung oder einer Fest-Loslageranordnung sein, und das zweite Bauteil kann ein Teil eines (loslagerseitigen) Führungswagens (3) der (Fest-)Loslageranordnung sein, wie in Fig. 4a und Fig. 4b dargestellt. Alternativ kann das erste Bauteil eine Grundplatte (11) einer Loslageranordnung oder einer Fest-Loslageranordnung sein, und das zweite Bauteil kann ein Teil einer (loslagerseitigen) Führungsschiene (1) der (Fest-)Loslageranordnung sein, wie in Fig. 5, 6a, 6b dargestellt.

Durch die spielfreie Montage des ersten Bauteils an dem zweiten Bauteil wird ein spielfreies Loslager ermöglicht. Das Loslager ermöglicht, wie oben beschrieben, einen Toleranzausgleich in allen drei Raumrichtungen. Das Loslager kann auf einfache Weise und kostengünstig bereitgestellt werden.

Gemäß einem Aspekt der vorliegenden Erfindung ist das erste Bauteil zwischen dem Gleitlager (7) und dem zweiten Bauteil angeordnet, und wenn der Träger (9) an dem zweiten Bauteil befestigt wird, übt das zweite Bauteil eine Befestigungskraft auf das erste Bauteil aus.

Durch die Klemmkraft und die Befestigungskraft kann das erste Bauteil zwischen dem Gleitlager (7) und dem zweiten Bauteil eingeklemmt werden. Die Befestigungskraft trägt somit dazu bei, die Bewegung des ersten Bauteils relativ zu dem zweiten Bauteil zu begrenzen. Ferner kann die Befestigungskraft eine Vorspannungskraft seitens des ersten Bauteils auf das Gleitlager (7) bewirken, wobei die Vorspannungskraft zumindest ein Teil der Kraft seitens des ersten Bauteils auf das Gleitlager (7) ist und zumindest einen Teil der Verformung des elastischen Elements (8) bewirkt.

Selbst wenn das elastische Element nicht weiter gestaucht wird, ist somit eine gleichbleibende Vorspannungskraft seitens des ersten Bauteils auf das Gleitlager (7) gegeben.

Die Vorspannungskraft bewirkt einen Teil der Verformung des elastischen Elements. Selbst wenn das elastische Element nicht weiter gestaucht wird, ist somit eine gleichbleibende Stauchung des elastischen Elements gegeben. Infolgedessen stellt das elastische Element (8) eine gleichbleibende Gegenkraft bereit, die auf das Gleitlager (7) einwirkt. Diese gleichbleibende Gegenkraft wird auf das erste Bauteil übertragen, sodass eine gleichbleibende Klemmkraft seitens des Gleitlagers (7) auf das erste Bauteil wirkt. Ferner bewirkt die gleichbleibende Klemmkraft eine gleichbleibende Haftreibungskraft zwischen dem Gleitlager (7) und dem ersten Bauteil. Dadurch entsteht ein Reibschluss zwischen dem Gleitlager (7) und dem ersten Bauteil. Somit kann, auch wenn das elastische Element nicht weiter gestaucht wird, das erste Bauteil relativ zu dem zweiten Bauteil in der Achsenrichtung und senkrecht zu der Achsenrichtung in Position gehalten werden. Insbesondere ist eine Bewegung des ersten Bauteils relativ zu dem zweiten Bauteil nur dann möglich, wenn eine äußere Kraft auf das erste Bauteil einwirkt, die größer ist als die gleichbleibende Klemmkraft bzw. die gleichbleibende Haftreibungskraft des vorgespannten Lagers.

Mit anderen Worten kann das Gleitlager (7) bei der Montage auf dem ersten Bauteil vorgespannt werden. Das Gleitlager (7) kann das zu befestigende Bauteil durch das elastische Element aufspannen. Der Träger (9), der das Gleitlager (7) trägt, kann die Vorspannung bei der Montage festschreiben, wenn der Träger (9) in das zweite Bauteil geschraubt wird.

Das in Fig. 2 dargestellte Maß H zeigt einen Abstand zwischen einer Auflagefläche des Gleitlagers (7) und einem Endabschnitt des Trägers (9) an. Das Maß H bestimmt die Vorspannung des elastischen Elements. Wenn der Träger (9) auf dem zweiten Bauteil befestigt wird, liegt die Auflagefläche des Gleitlagers (7) auf dem ersten Bauteil auf, und der Endabschnitt des Trägers (9) steht im Kontakt mit dem zweiten Bauteil. In diesem Zustand entspricht das Maß H einer Dicke des ersten Bauteils.

Man beachte, dass der Träger (9), das Gleitlager (7) und das elastische Element separat bereitgestellt und von einem Benutzer zu dem Befestigungselement zusammengesetzt werden können. Dazu schiebt der Benutzer zunächst das elastische Element auf den Träger (9), zum Beispiel die Hülse (9), und zwar in die Achsenrichtung des Trägers (9). Danach schiebt er das Gleitlager (7) auf die Hülse (9). Die Hülse (9) kann zum Beispiel einen Einstich haben. Das Gleitlager (7) wird dann beim Aufschieben geweitet und rastet in den Einstich ein. Es ist somit verliergesichert. Dies ist zwar für die Funktion des Loslagerelements (4) nicht notwendig, erleichtert aber die spätere Anwendung.

Wenn das Gleitlager (7) in Achsenrichtung des Loslagerelements (4) in den Einstich geschoben wird (Einrasten), hat es in diesem Einstich genügend Platz, um ein weiteres Stauchen des elastischen Elements zu ermöglichen. Der Einstich verhindert, dass das Gleitlager (7) verloren geht, bietet ihm aber ausreichend Platz, um die notwendige Bewegung zu ermöglichen.

Der Benutzer setzt anschließend das so zusammengesetzte Loslagerelement (4) in die Aufnahmebohrung des ersten Bauteils ein. Die Aufnahmebohrung kann vorgegeben sein oder in Abhängigkeit von den Maßen des Loslagerelements (4) erstellt werden. Als nächstes schraubt der Benutzer das erste Bauteil mit dem Loslagerelement (4) auf das zweite Bauteil. Das elastische Element wird dabei gestaucht und der Reibschluss wie oben beschrieben hergestellt. Dabei bestimmt das in Fig. 2 gezeigte Maß H die Vorspannung des elastischen Elements.

Bei der Montage kann ein Spalt zwischen dem Gleitlager (7) und dem Träger (9), zum Beispiel zwischen einem in Fig. 2 dargestellten Bund (13) des Gleitlagers (7) und einem in Fig. 2 dargestellten Vorsprung (12) des Trägers (9) verbleiben. Der Spalt kann zum Beispiel 0,1 mm breit sein. Die Spaltbreite bestimmt den zulässigen Ausgleich von Fluchtungsfehlern in der Achsenrichtung des Loslagerelements (4).

Man beachte, dass auch mehrere Loslagerelemente (4) verwendet werden können, um das erste Bauteil an dem zweiten Bauteil zu montieren.

Gemäß einem Aspekt der vorliegenden Erfindung umfasst das erste Bauteil eine Aufnahmebohrung. Wenn der Träger (9) an dem zweiten Bauteil befestigt wird, ist der Träger (9) zumindest teilweise oder vollständig in der Aufnahmebohrung angeordnet, wie in Fig. 4a für die erste Ausführungsform und Fig. 4b für die zweite Ausführungsform dargestellt. Der Träger (9), zum Beispiel die Hülse (9), ist kleiner als die Aufnahmebohrung, daher ist eine Bewegung des ersten Bauteils relativ zu dem zweiten Bauteil senkrecht zu der Achsenrichtung möglich, sofern die Kraft des Reibschlusses überwunden wird.

Jedoch wird durch die Anordnung des Trägers (9) in der Aufnahmebohrung des ersten Bauteils eine Bewegung des ersten Bauteils relativ zu dem zweiten Bauteil senkrecht zu der Achsenrichtung begrenzt. Die Bewegung des ersten Bauteils relativ zu dem zweiten Bauteil senkrecht zu der Achsenrichtung ist in ihrem Hub formschlüssig begrenzt. Mit anderen Worten ist der Weg zum Ausgleich der Toleranz formschlüssig begrenzt. Somit wird zusätzlich die Stabilität des Loslagers erhöht.

Die Aufnahmebohrung des ersten Bauteils kann eine Senkbohrung sein. Das heißt, das Loslagerelement (4) kann auch in dem ersten Bauteil versenkt werden, wie in Fig. 4a und Fig. 4b dargestellt. Hierdurch wird eine flächenbündige Montage des ersten Bauteils mithilfe des Loslagerelements (4) ermöglicht.

Das elastische Element (8) kann zum Beispiel ein O-Ring oder eine Feder aus Federstahl oder eine Federscheibe sein. Bevorzugte Materialien für das elastische Element sind zum Beispiel ein Elastomer oder Federstahl, zum Beispiel 1.4310, oder NBR. Bevorzugte Materialien für den Träger (9), wie die Hülse (9), sind zum Beispiel Edelstahl oder Stahl mit Beschichtung, zum Beispiel galvanisch verzinkt. Bevorzugte Materialien für das Gleitlager (7) sind zum Beispiel ein Polymer, zum Beispiel ein Hochleistungs-Gleitlagerpolymer, oder beschichteter Stahl (zur Reibungsreduzierung). Die Dauereinsatztemperatur des Loslagerelements (4) kann zum Beispiel von -20°C bis +80°C betragen.

Das Loslager gemäß der vorliegenden Erfindung kann für eine (Fest-)Loslageranordnung verwendet werden, wie im Folgenden näher beschrieben.

Gemäß einem Aspekt der vorliegenden Erfindung umfasst eine Loslageranordnung: das Loslager; eine Führungsschiene (1); einen Führungswagen (3), der auf der Führungsschiene (1) montierbar ist und ausgelegt ist, entlang der Führungsschiene (1) bewegt zu werden; und ein mittels des Führungswagens (3) zu führendes Bauteil (6), wobei das erste Bauteil ein Teil des zu führenden Bauteils (6) ist und das zweite Bauteil ein Teil des Führungswagens (3) ist. Eine solche Loslageranordnung, bei der das zu führende Bauteil (6) mithilfe des Loslagerelements (4) auf dem Führungswagen (3) montiert wird, wird hier als eine Loslageranordnung eines ersten Typs bezeichnet.

Gemäß einem weiteren Aspekt der vorliegenden Erfindung umfasst eine Fest-Loslageranordnung: die Loslageranordnung des ersten Typs, wobei die Führungsschiene (1) eine loslagerseitige Führungsschiene (1) ist und der Führungswagen (3) ein loslagerseitiger Führungswagen (3) ist; eine festlagerseitige Führungsschiene (2), die parallel zu der loslagerseitigen Führungsschiene (1) angeordnet ist; und einen festlagerseitigen Führungswagen (5), der auf der festlagerseitigen Führungsschiene (2) montierbar ist und ausgelegt ist, entlang der festlagerseitigen Führungsschiene (2) bewegt zu werden, wobei das zu führende Bauteil (6) an dem festlagerseitigen Führungswagen (5) befestigbar ist.

Eine solche Fest-Loslageranordnung, bei der das zu führende Bauteil (6) mithilfe des Loslagerelements (4) auf dem loslagerseitigen Führungswagen (3) montiert wird, wird hier als eine Fest-Loslageranordnung des ersten Typs bezeichnet. Die Fest-Loslageranordnung des ersten Typs ist in Fig. 4a und Fig. 4b dargestellt.

Insbesondere zeigt Fig. 4a eine Perspektivansicht einer Fest-Loslageranordnung eines ersten Typs gemäß einer ersten Ausführungsform. Hierbei ist das Loslagerelement (4), mit dem das zu führende Bauteil (6) auf dem Führungswagen (3) montiert wird, das Loslagerelement (4) gemäß der ersten Ausführungsform. Man beachte, dass auch eine Mehrzahl von, zum Beispiel vier, Loslagerelemente (4) der ersten Ausführungsform verwendet werden können, um das zu führende Bauteil (6) auf dem Führungswagen (3) zu montieren, wie in Fig. 4a gezeigt. Die Loslagerelemente (4) können zum Beispiel entlang der Führungsschiene (1) und/oder auf gegenüberliegenden Seiten der Führungsschiene (1) angeordnet sein, wie in Fig. 4a gezeigt.

Ferner zeigt Fig. 4b eine Perspektivansicht einer Fest-Loslageranordnung eines ersten Typs gemäß einer zweiten Ausführungsform. Hierbei ist das Loslagerelement (4), mit dem das zu führende Bauteil (6) auf dem Führungswagen (3) montiert wird, das Loslagerelement (4) gemäß der zweiten Ausführungsform. Man beachte, dass auch eine Mehrzahl von, zum Beispiel zwei, Loslagerelemente (4) der zweiten Ausführungsform verwendet werden können, um das zu führende Bauteil (6) auf dem Führungswagen (3) zu montieren, wie in Fig. 4b gezeigt. Die Loslagerelemente (4) können zum Beispiel entlang der Führungsschiene (1) angeordnet sein, und zwei Bohrungen (10) jedes Loslagerelements (4) der zweiten Ausführungsform können zum Beispiel auf gegenüberliegenden Seiten der Führungsschiene (1) angeordnet sein, wie in Fig. 4b gezeigt.

Bei der (Fest-)Loslageranordnung des ersten Typs erfolgt die Bewegung zum Ausgleich von Fluchtungsfehlern zwischen dem zu führenden Bauteil und dem (loslagerseitigen) Führungswagen (3). Dies ermöglicht eine spielfreie Fest-Loslageranordnung von mindestens zwei parallelen Führungen, die durch mindestens ein zu führendes Bauteil (6) miteinander verbunden sind. Die Führungsgenauigkeit der (Fest-)Loslageranordnung wird erhöht, während Lärm und Vibrationen verringert werden. Ferner können Fluchtungsfehler, insbesondere solche Fluchtungsfehler, die aus einer Abweichung in der Höhe einer Schiene oder einer Abweichung in dem horizontalen Abstand zwischen den zwei parallelen Schienen resultieren, ausgeglichen werden. Ein Verklemmen der Komponenten der (Fest-)Loslageranordnung und eine Beschädigung der (Fest-)Loslageranordnung können somit vermieden werden. Ferner wird eine einfache und kostengünstige Montage der (Fest-)Loslageranordnung ermöglicht, wie oben beschrieben.

Gemäß einem Aspekt der vorliegenden Erfindung umfasst eine Loslageranordnung: das Loslager; eine Grundplatte (11); eine Führungsschiene (1); einen Führungswagen (3), der auf der Führungsschiene (1) montierbar ist und ausgelegt ist, entlang der Führungsschiene (1) bewegt zu werden, wobei das erste Bauteil ein Teil der Grundplatte (11) ist und das zweite Bauteil ein Teil der Führungsschiene (1) ist.

Eine solche Loslageranordnung, bei der die Schiene (1) schwimmend gelagert ist und durch das Loslagerelement (4) befestigt wird, wird hier als eine Loslageranordnung eines zweiten Typs bezeichnet. In diesem Fall kann ein zu führendes Bauteil (6) starr mit dem Führungswagen (3) befestigt werden.

Gemäß einem weiteren Aspekt der vorliegenden Erfindung umfasst eine Fest-Loslageranordnung: die Loslageranordnung des zweiten Typs, wobei die Führungsschiene (1) eine loslagerseitige Führungsschiene (1) ist und der Führungswagen (3) ein loslagerseitiger Führungswagen (3) ist; eine festlagerseitige Führungsschiene (2), die parallel zu der loslagerseitigen Führungsschiene (1) angeordnet ist; und einen festlagerseitigen Führungswagen (5), der auf der festlagerseitigen Führungsschiene (2) montierbar ist und ausgelegt ist, entlang der festlagerseitigen Führungsschiene (2) bewegt zu werden, wobei die Grundplatte (11) an der festlagerseitigen Führungsschiene (2) befestigbar ist.

Eine solche Fest-Loslageranordnung, bei der die loslagerseitige Schiene (1) schwimmend gelagert ist und durch das Loslagerelement (4) befestigt wird, wird hier auch als eine Loslageranordnung des zweiten Typs bezeichnet. In diesem Fall kann ein zu führendes Bauteil (6) starr mit dem loslagerseitigen Führungswagen (3) und dem festlagerseitigen Führungswagen (5) befestigt werden. Die Fest-Loslageranordnung des zweiten Typs ist in Fig. 5, 6a, 6b und 6c dargestellt.

Insbesondere zeigt Fig. 5 eine Perspektivansicht einer Fest-Loslageranordnung eines zweiten Typs gemäß der vorliegenden Erfindung. Die Grundplatte (11) kann zum Beispiel ein Maschinenbett sein. Die loslagerseitige Führungsschiene (1) ist schwimmend gelagert und wird durch Loslagerelemente (4) befestigt. Die Führungsschienen (1, 2) enthalten in der dargestellten Montage ein Innengewinde. In dem zu führenden Bauteil (6) sind nun keine Loslagerelemente (4) mehr eingebaut, sondern es ist beidseitig fest mit den Führungswagen (3) und (5) verschraubt. Die Grundplatte (11) ist hinzugekommen. Die loslagerseitige Führungsschiene (1) wird nun von unten mit Loslagerelementen (4) befestigt.

In Fig. 6a bis Fig. 6c ist dies im Detail dargestellt. Fig. 6a zeigt eine Seitenansicht der Fest-Loslageranordnung aus Fig. 5, in der ein Schnittverlauf A-A gekennzeichnet ist. Fig. 6b zeigt eine Querschnittsansicht der Fest-Loslageranordnung aus Fig. 5 gemäß dem in Fig. 6a gekennzeichneten Schnittverlauf A-A. Fig. 6c zeigt einen vergrößerten Ausschnitt der Querschnittsansicht aus Fig. 6b. Im Schnitt A-A ist zu erkennen, dass die festlagerseitige Führungsschiene (2) mit Schrauben auf der Grundplatte (11) festgeschraubt wird. Die loslagerseitige Führungsschiene (2) wird mit Loslagerelementen (4) montiert. In Fig. 6c ist dies genauer zu erkennen. In die Bohrung (10) des Loslagerelements (4) wird eine Schraube eingeschraubt. Der Träger (9), zum Beispiel die Hülse (9), ist dadurch auf der loslagerseitigen Führungsschiene (1) starr fixiert. Über das elastische Element (8), zum Beispiel den O-Ring (8), wird das Gleitlager (7) auf die Grundplatte (11) gedrückt. Der Reibschluss senkrecht zu der Achsenrichtung des Loslagerelements (4) ist hergestellt. In der Achsenrichtung findet nur eine Bewegung statt, wenn der O-Ring (8) weiter gestaucht wird. In allen drei Raumrichtungen ist der Hub durch Formschluss begrenzt.

Bei der Loslageranordnung bzw. Fest-Loslageranordnung des zweiten Typs erfolgt die Bewegung zum Ausgleich von Fluchtungsfehlern somit durch Verschieben der (loslagerseitigen) Führungsschiene auf der Grundplatte (11). Dies ermöglicht eine spielfreie Fest-Loslageranordnung von mindestens zwei parallelen Führungen, wobei jede der Führungen einen Führungswagen und eine Führungsschiene umfasst. Die Führungsgenauigkeit der (Fest-)Loslageranordnung wird erhöht, während Lärm und Vibrationen verringert werden. Ferner können Fluchtungsfehler, insbesondere solche Fluchtungsfehler, die aus einer Abweichung in der Höhe einer Schiene oder einer Abweichung in dem horizontalen Abstand zwischen den zwei parallelen Schienen resultieren, ausgeglichen werden. Somit kann ein Verklemmen der Komponenten der (Fest-)Loslageranordnung und somit eine Beschädigung der (Fest-)Loslageranordnung vermieden werden. Ferner wird eine einfache und kostengünstige Montage der (Fest-)Loslageranordnung ermöglicht, wie oben beschrieben.

Man beachte, dass auf jeder Führungsschiene jeder der oben beschriebenen Loslageranordnungen und Fest-Loslageranordnungen auch eine Mehrzahl von Führungswagen verfahren kann, die jeweils wie oben beschrieben mit der Führungsschiene bzw. dem zu führenden Bauteil verbunden sein können. In diesem Fall ist der Toleranzausgleich umso wichtiger.

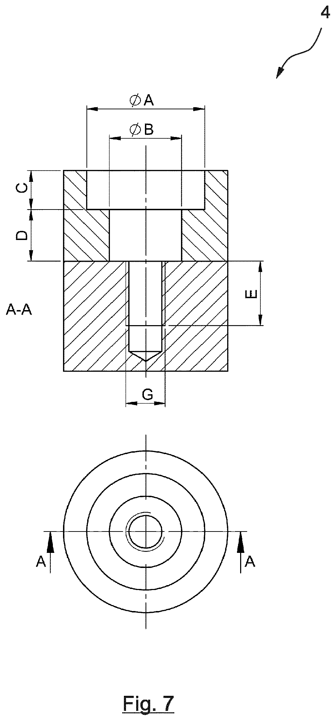

Fig. 7 zeigt eine seitliche Querschnittsansicht und eine entsprechende Draufsicht einer beispielhaften Aufnahmebohrung in einem ersten Bauteil und eines beispielhaften Gewindes in einem zweiten Bauteil für ein Loslagerelement (4) der vorliegenden Erfindung.

Die Aufnahmebohrung in dem ersten Bauteil umfasst zwei zylindrische Hohlräume, jeweils mit Durchmesser øA und Höhe C bzw. Durchmesser øB und Höhe D. Die Aufnahmebohrung in dem ersten Bauteil dient der Aufnahme des Trägers (9) des Loslagerelements (4), wie zum Beispiel in Fig. 6c zu erkennen ist. Das Gewinde in dem zweiten Bauteil hat den Durchmesser G und die Höhe E. In das Gewinde wird die Schraube zur Befestigung des Trägers (9) an dem zweiten Bauteil geschraubt.

Man beachte, dass der Toleranzausgleich, das heißt, die maximal mögliche Bewegung des ersten Bauteils relativ zu dem zweiten Bauteil (in Achsenrichtung bzw. senkrecht zu der Achsenrichtung) von den Maßen øA, øB, C, D, E und G der Aufnahmebohrung und des Gewindes abhängen kann. Der Toleranzausgleich in Achsenrichtung oder senkrecht zu der Achsenrichtung kann zum Beispiel ±0,1 mm, ±0,2 mm, ±0,3 mm, ±0,4 mm oder ±0,5 mm betragen. Das Maß C bestimmt ferner, ob der Träger (9) über der Senkung hervorsteht oder nicht. Man beachte ferner, dass auch Langlöcher statt Rundlöcher (entsprechend der zweiten Ausführungsform statt der ersten Ausführungsform des Loslagerelements (4), wie oben beschrieben) verwendet werden können.

Die vorliegende Erfindung kann alternativ durch die folgenden nummerierten Aspekte der Erfindung beschrieben werden:
1. Ein Loslagerelement (4) zur Montage eines ersten Bauteils an einem zweiten Bauteil, wobei das Loslagerelement (4) umfasst:
   einen Träger (9), der ausgelegt ist, an dem zweiten Bauteil befestigt zu werden;
   ein Gleitlager (7), das relativ zu dem Träger (9) beweglich angeordnet ist; und
   ein elastisches Element (8), das derart zwischen dem Träger (9) und dem Gleitlager (7) angeordnet ist, dass, wenn eine Kraft seitens des ersten Bauteils auf das Gleitlager (7) einwirkt, die Kraft eine Verformung des elastischen Elements (8) bewirkt.
2. Das Loslagerelement (4) nach Aspekt 1, wobei, wenn die Kraft auf das Gleitlager (7) einwirkt, das Gleitlager ausgelegt ist, sich relativ zu dem Träger (9) in eine Achsenrichtung des Loslagerelements (4) zu bewegen, so dass das elastische Element (8) gestaucht wird.
3. Das Loslagerelement (4) nach Aspekt 2, wobei der Träger (9) einen Anschlag (12) für das Gleitlager (7) umfasst, wobei der Anschlag (12) ausgelegt ist, die Stauchung des elastischen Elements (8) zu begrenzen.
4. Das Loslagerelement (4) nach einem der Aspekte 2 bis 3, wobei, wenn das elastische Element (8) gestaucht wird, das elastische Element (8) ausgelegt ist, eine Gegenkraft bereitzustellen, die auf das Gleitlager (7) einwirkt.
5. Das Loslagerelement (4) nach Aspekt 4, wobei die Gegenkraft eine Klemmkraft seitens des Gleitlagers (7) auf das erste Bauteil bewirkt, wobei die Klemmkraft geeignet ist, einer Kraft auf das erste Bauteil in der Achsenrichtung entgegenzuwirken und dadurch das erste Bauteil relativ zu dem zweiten Bauteil in der Achsenrichtung in Position zu halten sofern die Kraft auf das erste Bauteil in der Achsenrichtung nicht größer ist als die Klemmkraft.
6. Das Loslagerelement (4) nach Aspekt 5, wobei die Klemmkraft eine Haftreibungskraft zwischen dem Gleitlager (7) und dem ersten Bauteil bewirkt, wobei die Haftreibungskraft geeignet ist, einer Kraft auf das erste Bauteil senkrecht zu der Achsenrichtung entgegenzuwirken und dadurch das erste Bauteil relativ zu dem zweiten Bauteil mittels Reibschluss senkrecht zu der Achsenrichtung in Position zu halten sofern die Kraft auf das erste Bauteil senkrecht zu der Achsenrichtung nicht größer ist als die Haftreibungskraft.
7. Das Loslagerelement (4) nach einem der vorangehenden Aspekte, wobei das Gleitlager (7) den Träger (9) in einer Ebene senkrecht zu der Achsenrichtung zumindest teilweise oder vollständig umschließt, so dass eine Bewegung des Gleitlagers (7) relativ zu dem Träger (9) auf eine Bewegung in die Achsenrichtung beschränkt wird.
8. Das Loslagerelement (4) nach einem der Aspekte 1 bis 7, wobei der Träger (9) ein oder mehrere Bohrungen (10) umfasst, die ausgelegt sind, ein oder mehrere Schrauben zur Befestigung des Trägers (9) an dem zweiten Bauteil zu führen, oder wobei der Träger (9) ein oder mehrere Gewinde umfasst, in die ein oder mehrere Schrauben schraubbar sind, um den Träger (9) an dem zweiten Bauteil zu befestigen.
9. Das Loslagerelement (4) nach Aspekt 8, wobei jede Bohrung (10) der ein oder mehreren Bohrungen (10) eine Senkbohrung ist.
10. Das Loslagerelement (4) nach Aspekt 8 oder 9,
   i) wobei der Träger (9) nur eine kreisförmige Bohrung (10) umfasst, und wobei der Träger (9) eine kreisförmige Querschnittsfläche senkrecht zu der Achsenrichtung aufweist, wobei die kreisförmige Querschnittsfläche konzentrisch mit der kreisförmigen Bohrung ist, oder
   ii) wobei der Träger (9) mindestens zwei kreisförmige Bohrungen (10) umfasst, und wobei der Träger (9) eine Querschnittsfläche aufweist, die aus einem Rechteck und zwei an gegenüberliegenden Seiten des Rechtecks angrenzenden Halbkreisen gebildet wird, wobei jeder Halbkreis konzentrisch mit einer der mindestens zwei kreisförmigen Bohrungen ist.
11. Das Loslagerelement (4) nach einem der Aspekte 1 bis 7, wobei der Träger (9) eine Bundschraube ist, die ausgelegt ist, in ein Gewinde des zweiten Bauteils geschraubt zu werden.
12. Ein Loslager, welches umfasst:
   das Loslagerelement (4) nach einem der Aspekte 1 bis 11;
   das erste Bauteil; und
   das zweite Bauteil.
13. Das Loslager nach Aspekt 12, wobei das erste Bauteil zwischen dem Gleitlager (7) und dem zweiten Bauteil angeordnet ist, und wobei, wenn der Träger (9) an dem zweiten Bauteil befestigt wird, das zweite Bauteil ausgelegt ist, eine Befestigungskraft auf das erste Bauteil auszuüben.
14. Das Loslager nach Aspekt 13, wobei die Befestigungskraft eine Vorspannungskraft seitens des ersten Bauteils auf das Gleitlager (7) bewirkt, die zumindest ein Teil der Kraft seitens des ersten Bauteils auf das Gleitlager (7) ist und zumindest einen Teil der Verformung des elastischen Elements (8) bewirkt.
15. Das Loslager nach einem der Aspekte 12 bis 14, wobei das erste Bauteil eine Aufnahmebohrung umfasst, welche vorzugsweise eine Senkbohrung ist, und wobei, wenn der Träger (9) an dem zweiten Bauteil befestigt wird, der Träger (9) zumindest teilweise oder vollständig in der Aufnahmebohrung angeordnet ist, so dass eine Bewegung des ersten Bauteils relativ zu dem zweiten Bauteil senkrecht zu der Achsenrichtung begrenzt wird.
16. Eine Loslageranordnung, welche umfasst:
   das Loslager nach einem der Aspekte 12 bis 15;
   eine Führungsschiene (1);
   einen Führungswagen (3), der auf der Führungsschiene (1) montierbar ist und ausgelegt ist, entlang der Führungsschiene (1) bewegt zu werden; und
   ein mittels des Führungswagens (3) zu führendes Bauteil (6),
   wobei das erste Bauteil ein Teil des zu führenden Bauteils (6) ist und das zweite Bauteil ein Teil des Führungswagens (3) ist.
17. Eine Fest-Loslageranordnung, welche umfasst:
   die Loslageranordnung nach Aspekt 16, wobei die Führungsschiene (1) eine loslagerseitige Führungsschiene (1) ist und der Führungswagen (3) ein loslagerseitiger Führungswagen (3) ist;
   eine festlagerseitige Führungsschiene (2), die parallel zu der loslagerseitigen Führungsschiene (1) angeordnet ist; und
   einen festlagerseitigen Führungswagen (5), der auf der festlagerseitigen Führungsschiene (2) montierbar ist und ausgelegt ist, entlang der festlagerseitigen Führungsschiene (2) bewegt zu werden,
   wobei das zu führende Bauteil (6) an dem festlagerseitigen Führungswagen (5) befestigbar ist.
18. Eine Loslageranordnung, welche umfasst:
   das Loslager nach einem der Aspekte 12 bis 15;
   eine Grundplatte (11);
   eine Führungsschiene (1);
   einen Führungswagen (3), der auf der Führungsschiene (1) montierbar ist und ausgelegt ist, entlang der Führungsschiene (1) bewegt zu werden,
   wobei das erste Bauteil ein Teil der Grundplatte (11) ist und das zweite Bauteil ein Teil der Führungsschiene (1) ist.
19. Eine Fest-Loslageranordnung, welche umfasst:
   die Loslageranordnung nach Aspekt 18, wobei die Führungsschiene (1) eine loslagerseitige Führungsschiene (1) ist und der Führungswagen (3) ein loslagerseitiger Führungswagen (3) ist;
   eine festlagerseitige Führungsschiene (2), die parallel zu der loslagerseitigen Führungsschiene (1) angeordnet ist; und
   einen festlagerseitigen Führungswagen (5), der auf der festlagerseitigen Führungsschiene (2) montierbar ist und ausgelegt ist, entlang der festlagerseitigen Führungsschiene (2) bewegt zu werden,
   wobei die Grundplatte (11) an der festlagerseitigen Führungsschiene (1) befestigbar ist.
20. Vorrichtung zur Montage eines Bauteils auf einem Führungswagen zum Ausgleich von Fluchtungsfehlern, wobei die Vorrichtung das zu befestigende Bauteil auf dem Führungswagen spielfrei fixiert und eine Bewegung zulässt sobald eine einwirkende Kraft größer ist als die Reibung der Fixierung, und wobei der Hub des Ausgleichs formschlüssig durch die Geometrie der Bauteile begrenzt ist, und wobei die Vorrichtung mindestens ein Gleitlager beinhaltet, das bei der Montage durch mindestens ein elastisches Element das zu befestigende Bauteil aufspannt und von einer Hülse (9) oder Bundschraube getragen wird, die die Vorspannung der Vorrichtung bei der Montage festschreibt.
21. Vorrichtung zur Montage einer Führungsschiene auf einer Montagefläche zum Ausgleich von Fluchtungsfehlern, wobei die Vorrichtung die Führungsschiene auf der Montagefläche spielfrei fixiert und eine Bewegung zulässt sobald eine einwirkende Kraft größer ist als die Reibung der Fixierung, und wobei der Hub des Ausgleichs formschlüssig durch die Geometrie der Bauteile begrenzt ist, und wobei die Vorrichtung mindestens ein Gleitlager beinhaltet, das bei der Montage durch mindestens ein elastisches Element das zu befestigende Bauteil aufspannt und von einer Hülse (9) oder Bundschraube getragen wird, die die Vorspannung der Vorrichtung bei der Montage festschreibt.

### Liste der Bezugszeichen

- 1: Führungsschiene, loslagerseitige Führungsschiene
- 2: Festlagerseitige Führungsschiene
- 3: Führungswagen, loslagerseitiger Führungswagen
- 4: Loslagerelement
- 5: Festlagerseitiger Führungswagen
- 6: Zu führendes Bauteil
- 7: Gleitlager
- 8: Elastisches Element
- 9: Träger, Hülse
- 10: Bohrung
- 11: Grundplatte
- 12: Anschlag, Vorsprung des Trägers
- 13: Bund des Gleitlagers

## Patentansprüche

1. Ein Loslagerelement (4) zur Montage eines ersten Bauteils an einem zweiten Bauteil, wobei das Loslagerelement (4) umfasst:
einen Träger (9), der ausgelegt ist, an dem zweiten Bauteil befestigt zu werden;
ein Gleitlager (7), das relativ zu dem Träger (9) beweglich angeordnet ist; und
ein elastisches Element (8), das derart zwischen dem Träger (9) und dem Gleitlager (7) angeordnet ist, dass, wenn eine Kraft seitens des ersten Bauteils auf das Gleitlager (7) einwirkt, die Kraft eine Verformung des elastischen Elements (8) bewirkt.

2. Das Loslagerelement (4) nach Anspruch 1, wobei, wenn die Kraft auf das Gleitlager (7) einwirkt, das Gleitlager ausgelegt ist, sich relativ zu dem Träger (9) in eine Achsenrichtung des Loslagerelements (4) zu bewegen, so dass das elastische Element (8) gestaucht wird.

3. Das Loslagerelement (4) nach Anspruch 2, wobei der Träger (9) einen Anschlag (12) für das Gleitlager (7) umfasst, wobei der Anschlag (12) ausgelegt ist, die Stauchung des elastischen Elements (8) zu begrenzen.

4. Das Loslagerelement (4) nach einem der Ansprüche 2 bis 3, wobei, wenn das elastische Element (8) gestaucht wird, das elastische Element (8) ausgelegt ist, eine Gegenkraft bereitzustellen, die auf das Gleitlager (7) einwirkt.

5. Das Loslagerelement (4) nach Anspruch 4, wobei die Gegenkraft eine Klemmkraft seitens des Gleitlagers (7) auf das erste Bauteil bewirkt, wobei die Klemmkraft geeignet ist, einer Kraft auf das erste Bauteil in der Achsenrichtung entgegenzuwirken und dadurch das erste Bauteil relativ zu dem zweiten Bauteil in der Achsenrichtung in Position zu halten sofern die Kraft auf das erste Bauteil in der Achsenrichtung nicht größer ist als die Klemmkraft.

6. Das Loslagerelement (4) nach Anspruch 5, wobei die Klemmkraft eine Haftreibungskraft zwischen dem Gleitlager (7) und dem ersten Bauteil bewirkt, wobei die Haftreibungskraft geeignet ist, einer Kraft auf das erste Bauteil senkrecht zu der Achsenrichtung entgegenzuwirken und dadurch das erste Bauteil relativ zu dem zweiten Bauteil mittels Reibschluss senkrecht zu der Achsenrichtung in Position zu halten sofern die Kraft auf das erste Bauteil senkrecht zu der Achsenrichtung nicht größer ist als die Haftreibungskraft.

7. Das Loslagerelement (4) nach einem der vorangehenden Ansprüche, wobei das Gleitlager (7) den Träger (9) in einer Ebene senkrecht zu der Achsenrichtung zumindest teilweise oder vollständig umschließt, so dass eine Bewegung des Gleitlagers (7) relativ zu dem Träger (9) auf eine Bewegung in die Achsenrichtung beschränkt wird.

8. Das Loslagerelement (4) nach einem der Ansprüche 1 bis 7, wobei der Träger (9) ein oder mehrere Bohrungen (10) umfasst, die ausgelegt sind, ein oder mehrere Schrauben zur Befestigung des Trägers (9) an dem zweiten Bauteil zu führen, oder wobei der Träger (9) ein oder mehrere Innengewinde umfasst, in die ein oder mehrere Schrauben schraubbar sind, um den Träger (9) an dem zweiten Bauteil zu befestigen, oder wobei der Träger (9) eine Schraube mit Außengewinde ist, vorzugsweise eine Bundschraube, die ausgelegt ist, in ein Gewinde des zweiten Bauteils geschraubt zu werden.

9. Ein Loslager, welches umfasst:
das Loslagerelement (4) nach einem der Ansprüche 1 bis 8;
das erste Bauteil; und
das zweite Bauteil.

10. Das Loslager nach Anspruch 9, wobei das erste Bauteil zwischen dem Gleitlager (7) und dem zweiten Bauteil angeordnet ist, und wobei, wenn der Träger (9) an dem zweiten Bauteil befestigt wird, das zweite Bauteil ausgelegt ist, eine Befestigungskraft auf das erste Bauteil auszuüben, vorzugsweise
wobei die Befestigungskraft eine Vorspannungskraft seitens des ersten Bauteils auf das Gleitlager (7) bewirkt, die zumindest ein Teil der Kraft seitens des ersten Bauteils auf das Gleitlager (7) ist und zumindest einen Teil der Verformung des elastischen Elements (8) bewirkt.

11. Das Loslager nach einem der Ansprüche 9 bis 10, wobei das erste Bauteil eine Aufnahmebohrung umfasst, welche vorzugsweise eine Senkbohrung ist, und wobei, wenn der Träger (9) an dem zweiten Bauteil befestigt wird, der Träger (9) zumindest teilweise oder vollständig in der Aufnahmebohrung angeordnet ist, so dass eine Bewegung des ersten Bauteils relativ zu dem zweiten Bauteil senkrecht zu der Achsenrichtung begrenzt wird.

12. Eine Loslageranordnung, welche umfasst:
das Loslager nach einem der Ansprüche 9 bis 11;
eine Führungsschiene (1);
einen Führungswagen (3), der auf der Führungsschiene (1) montierbar ist und ausgelegt ist, entlang der Führungsschiene (1) bewegt zu werden; und
ein mittels des Führungswagens (3) zu führendes Bauteil (6),
wobei das erste Bauteil ein Teil des zu führenden Bauteils (6) ist und das zweite Bauteil ein Teil des Führungswagens (3) ist.

13. Eine Fest-Loslageranordnung, welche umfasst:
die Loslageranordnung nach Anspruch 12, wobei die Führungsschiene (1) eine loslagerseitige Führungsschiene (1) ist und der Führungswagen (3) ein loslagerseitiger Führungswagen (3) ist;
eine festlagerseitige Führungsschiene (2), die parallel zu der loslagerseitigen Führungsschiene (1) angeordnet ist; und
einen festlagerseitigen Führungswagen (5), der auf der festlagerseitigen Führungsschiene (2) montierbar ist und ausgelegt ist, entlang der festlagerseitigen Führungsschiene (2) bewegt zu werden,
wobei das zu führende Bauteil (6) an dem festlagerseitigen Führungswagen (5) befestigbar ist.

14. Eine Loslageranordnung, welche umfasst:
das Loslager nach einem der Ansprüche 9 bis 11;
eine Grundplatte (11);
eine Führungsschiene (1);
einen Führungswagen (3), der auf der Führungsschiene (1) montierbar ist und ausgelegt ist, entlang der Führungsschiene (1) bewegt zu werden,
wobei das erste Bauteil ein Teil der Grundplatte (11) ist und das zweite Bauteil ein Teil der Führungsschiene (1) ist.

15. Eine Fest-Loslageranordnung, welche umfasst:
die Loslageranordnung nach Anspruch 14, wobei die Führungsschiene (1) eine loslagerseitige Führungsschiene (1) ist und der Führungswagen (3) ein loslagerseitiger Führungswagen (3) ist;
eine festlagerseitige Führungsschiene (2), die parallel zu der loslagerseitigen Führungsschiene (1) angeordnet ist; und
einen festlagerseitigen Führungswagen (5), der auf der festlagerseitigen Führungsschiene (2) montierbar ist und ausgelegt ist, entlang der festlagerseitigen Führungsschiene (2) bewegt zu werden,
wobei die Grundplatte (11) an der festlagerseitigen Führungsschiene (1) befestigbar ist.
